Europäisches Patentamt

European Patent Office

Office européen des brevets

(11) Veröffentlichungsnummer: **0 299 285 B1**

(12) **EUROPÄISCHE PATENTSCHRIFT**

(45) Veröffentlichungstag der Patentschrift: **02.09.92**

(21) Anmeldenummer: **88110442.6**

(22) Anmeldetag: **30.06.88**

(51) Int. Cl.⁵: **B25J 18/02**, B25J 19/00

(54) **Lineareinheit für eine Montage-Einrichtung der Handhabungstechnik.**

(30) Priorität: **10.07.87 CH 2639/87**

(43) Veröffentlichungstag der Anmeldung:
**18.01.89 Patentblatt 89/03**

(45) Bekanntmachung des Hinweises auf die
Patenterteilung:
**02.09.92 Patentblatt 92/36**

(84) Benannte Vertragsstaaten:
**AT BE CH DE ES FR GB GR IT LI LU NL SE**

(56) Entgegenhaltungen:
**DE-U- 8 601 444**
**FR-A- 2 566 847**
**Le-h-rb uch de**
**US-A- 4 507 045**
**US-A- 4 516 476**

(73) Patentinhaber: **Hirschmann, Gregory C.**
**Rautistrasse 12**
**CH-8047 Zürich(CH)**

(72) Erfinder: **Hirschmann, Gregory C.**
**Rautistrasse 12**
**CH-8047 Zürich(CH)**

(74) Vertreter: **EGLI-EUROPEAN PATENT ATTOR-**
**NEYS**
**Horneggstrasse 4**
**CH-8008 Zürich(CH)**

**Beschreibung**

Die Erfindung bezieht sich auf eine Montage-Einrichtung, bestehend aus einer Lineareinheit und einem relativ dazu verstellbaren Anbauelement mit elektrisch/pneumatisch oder elektrisch/hydraulisch ansteuerbarem Greiferorgan, wobei die Lineareinheit ein Gehäuse, eine darin angeordnete und als Kolben/Zylindereinheit ausgebildete Betätigungsvorrichtung sowie eine achsparallel dazu angeordnete und mit einem ersten Führungsrohr versehene Führungsvorrichtung umfasst.

Aus der US-A 4 507 045 ist eine Einrichtung zum Greifen und Transportieren von Werkstücken bekannt, welche im wesentlichen ein zur Aufnahme von Greiferelementen ausgebildetes Kopfstück, ein an einem geeigneten Standelement befestigtes Trägerelement sowie eine erste Kolben/Zylindereinheit umfasst, welche mit dem einen Ende an dem Trägerelement gelagert und an dem anderen Ende mit einem entsprechend als Anschlussorgan ausgebildeten Endstück versehen und durch verteilt angeordnete Stangen am Trägerelement gelagert ist. Das Kopfstück ist mittels der ersten Kolben/Zylindereinheit linear und relativ zu dem Trägerelement verstellbar, während die Greiferelemente von einer im Kopfstück angeordneten und mit einer Rohrleitung in Verbindung stehenden zweiten Kolben/ Zylindereinheit entsprechend betätigt werden.
Bei dieser Einrichtung erfolgt die Energieversorgung der beiden Kolben/Zylindereinheiten im wesentlichen mittels extern angeordneter Steuerorgane (Steuerventile), die über weitgehend freiliegende und gegen unbeabsichtigten Eingriff ungeschützte Kabel oder Schläuche einerseits mit dem Anschlussorgan der ersten Kolben/Zylindereinheit und andererseits mit der Rohrleitung der zweiten Kolben/Zylindereinheit in Verbindung stehen und entsprechend angeschlossen sind.

Aus der DE-A 29 14 650 ist eine mit entsprechend angeordneten Peripheriegeräten in Wirkverbindung stehende Einrichtung bekannt, welche im wesentlichen ein zwischen zwei im Abstand zueinander angeordneten Flanschen angeordnetes und zur Aufnahme einer Stellstange und einer Führungsstange ausgebildetes erstes Gehäuse sowie ein zur Druckluftführung mit mehreren Bohrungen versehenes zweites Gehäuse umfasst.
Bei dieser Einrichtung wird die pneumatische Energieversorgung der Peripheriegeräte im wesentlichen über teleskopartig im zweiten Gehäuse längenverstellbare Rohre erreicht, während die elektrische Energieversorgung der Peripheriegeräte über weitgehend freiliegende, spiralartig an der Führungsstange aufgewickelte und gegen unbeabsichtigten Eingriff ungeschützte Kabel oder Schläuche erfolgt.

Der Erfindung liegt die Aufgabe zugrunde, bei einer Lineareinheit der genannten Art den konstruktiven Aufbau dahingehend zu verbessern, dass unter Beibehaltung einer einwandfreien Energieversorgung die einzelnen Steuer- und Funktionselemente und deren Zuleitungen gegen unbeabsichtigten, äusseren Eingriff geschützt sind.

Diese Aufgabe wird erfindungsgemäss dadurch gelöst, dass das Gehäuse im Profilquerschnitt gesehen in mehrere, in Längsrichtung orientierte und im wesentlichen durch entsprechend angeordnete Wände gebildete Kammern unterteilt ist, welche zum getrennten Einbau eines Steuerventils, der Betätigungsvorrichtung, der Führungsvorrichtung und eines zweiten Führungsrohres ausgebildet sind, und dass einerseits von dem eingebauten Steuerventil über entsprechende Kanäle der Kolben/Zylindereinheit sowie dem Anbauelement die pneumatische oder hydraulische Energie zuführbar und andererseits über ein im zweiten Führungsrohr angeordnetes und in Längsrichtung in der einen Kammer rollbar geführtes, elektrisches Flachbandkabel die elektrische Energie zuführbar ist.

Weitere Merkmale der Erfindung ergeben sich aus der folgenden Beschreibung in Verbindung mit der Zeichnung und den weiteren Patentansprüchen.

Die Erfindung wird nachstehend in Verbindung mit der Zeichnung beschrieben.
Es zeigt:

Fig.1 eine schematisch dargestellte Montage-Einrichtung der Handhabungstechnik mit einer Lineareinheit,

Fig.2 die schematisch und in Schnittansicht dargestellte Lineareinheit für die Montage-Einrichtung gemäss Fig.1,

Fig.3 die Lineareinheit gemäss Fig.2 in einer anderen Schnittebene,

Fig.4 einen in grösserem Massstab dargestellten Schnitt gemäss der Linie IV-IV in Fig.2, und

Fig.5 einen in grösserem Massstab dargestellten Schnitt gemäss der Linie V-V in Fig.3.

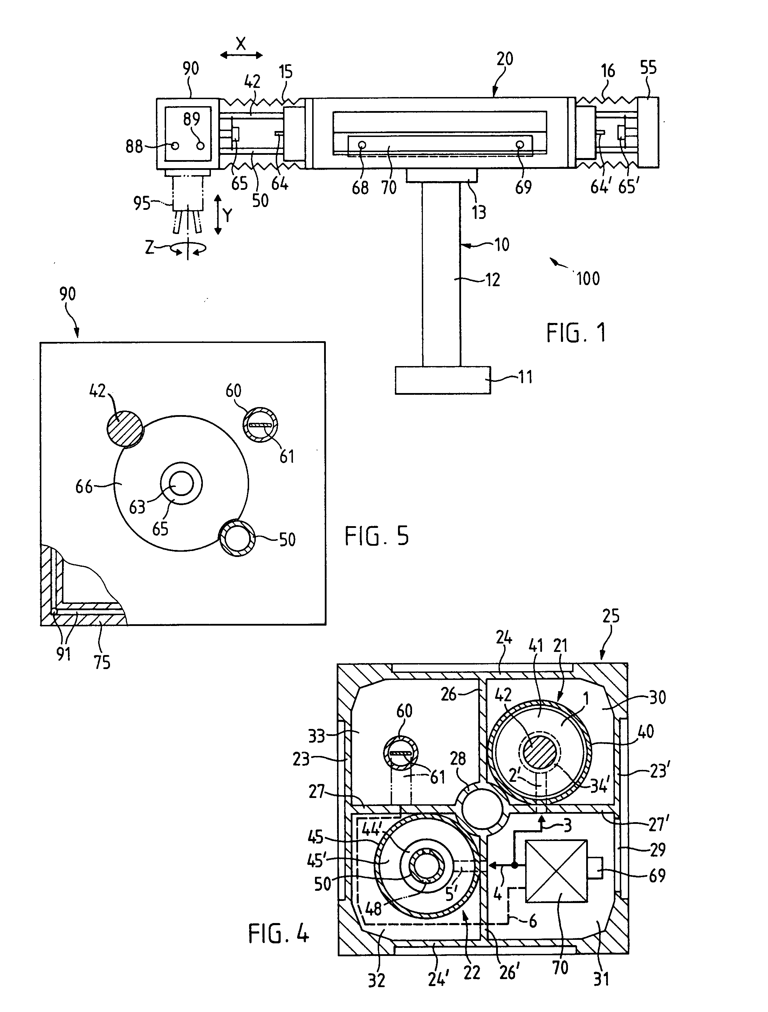

In Fig.1 ist in Ansicht eine in ihrer Gesamtheit mit 100 bezeichnete Montage-Einrichtung der Handhabungstechnik dargestellt, welche zur Automatisierung von vorgegebenen Bewegungs- und/oder Handhabungsabläufen in Montageanlagen, Fertigungsstrassen oder dergleichen ausgebildet ist. Die als Ausführungsbeispiel in stativbauweise schematisch dargestellte Montage-Einrichtung 100 umfasst im wesentlichen ein Stativ 10, bestehend aus einem Stativfuss 11, einer Standsäule 12 und einem Trägerelement 13. Das Trägerelement 13 ist zur Aufnahme einer Lineareinheit 20 ausgebildet, welche Lineareinheit 20 mit nicht näher dargestellten Mitteln am Trägerelement 13 lösbar befestigt ist. Die Standsäule 12 des Stativs 10 kann in nicht dargestellter, an sich bekannter Weise höhenverstellbar ausgebildet sein, so dass auch die Lineareinheit 20 höhenverstellbar und den jeweiligen Anforderungen entsprechend anpassbar ist. Weiterhin erkennt man in Figur 1 ein mit der Lineareinheit 20 wirkverbundenes Anbauelement 90 sowie ein daran angeordnetes, schematisch dargestelltes Greiferorgan 95. Zwischen der Lineareinheit 20 und dem Anbauelement 90 auf der einen Seite und der Lineareinheit 20 und einem Endstück 55 auf der anderen Seite ist zum Schutz von Betätigungs- und Führungselementen je ein Faltenbalg 15,16 angeordnet und mit nicht dargestellten Mitteln befestigt.

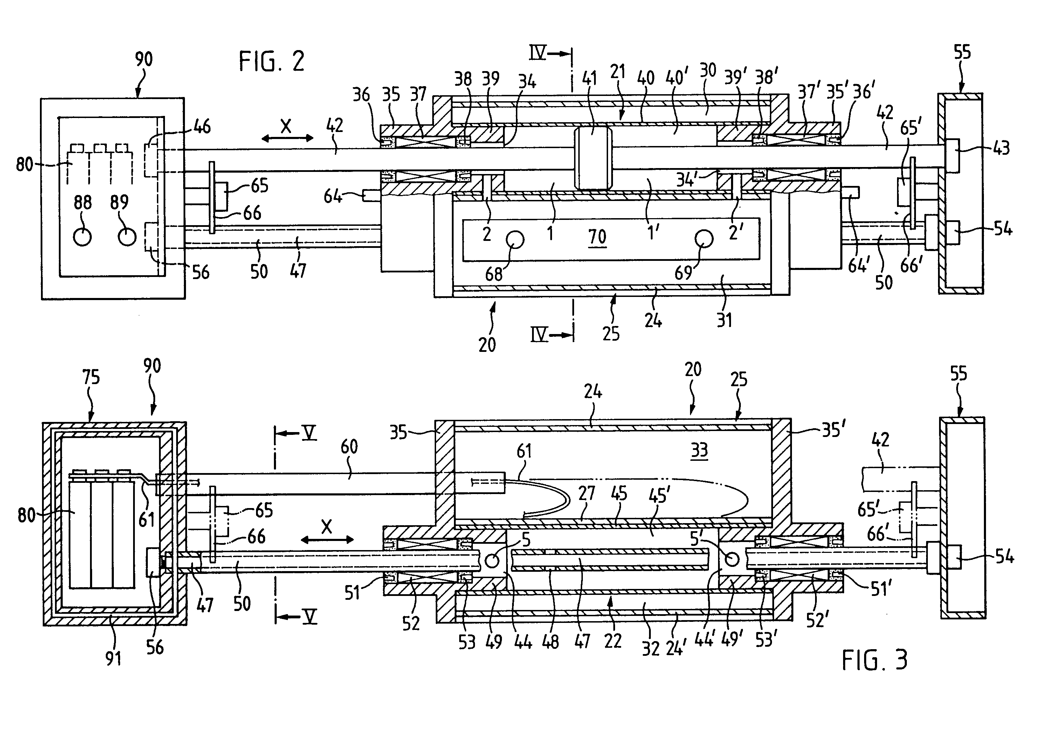

Die in Fig. 2 in Schnittansicht dargestellte Lineareinheit 20 umfasst ein Gehäuse 25, welches auf der einen Seite mit einem ersten Flanschkörper 35 und auf der anderen Seite mit einem zweiten Flanschkörper 35′ weitgehend verschlossen ist. Die beiden Flanschkörper 35,35′ sind mit nicht dargestellten Befestigungsmitteln am Gehäuse 25 befestigt und weisen in axialer Richtung in das Gehäuse 25 ragenden Stutzen 39,39′ auf. Die beiden ersten Stutzen 39,39′ sind durch einen ersten Rohrkörper 40 miteinander verbunden, wobei der Rohrkörper 40 in nicht näher dargestellter, an sich bekannter Weise am äusseren Durchmesser des jeweiligen Stutzens 39,39′ abgedichtet gelagert ist. Die beiden ersten Stutzen 39,39′ werden in axialer Richtung je von einer zur Lagerung einer Kolbenstange 42 ausgebildeten Bohrung 34,34′ durchdrungen. Die mit einem an der Innenwand 40′ des Rohrkörpers 4o abgedichtet geführten Kolbens 41 wirkverbundene Kolbenstange 42 ist in den beiden, im vorderen Bereich je mit einem Linearlager 37,37′ sowie Dichtungen 36,36′ und 38,38′ versehenen Stutzen 39,39′ gelagert und in Pfeilrichtung X verschiebbar geführt. Die Teile 40,41 und 42 bilden im wesentlichen eine mit 21 bezeichnete Betätigungsvorrichtung für die lineare Bewegung des Anbauelements 90 in Pfeilrichtung X.

Fig. 3 zeigt die im Schnitt dargestellte Lineareinheit 20 in einer anderen Schnittebene und man erkennt das mittels der beiden seitlichen Flansche 35,35′ verschlossene Gehäuse 25. In dieser Ebene sind die beiden Flansche 35,35′ mit in das Gehäuse 25 gerichteten und zur Lagerung eines Rohrkörpers 50 ausgebildete Stutzen 49,49′ versehen. Die beiden zweiten Stutzen 49,49′ sind durch den Rohrkörper 45 miteinander verbunden, wobei der Rohrkörper 45 ebenfalls in nicht dargestellter Weise am äusseren Durchmesser der beiden Stutzen 49,49′ abgedichtet gelagert ist. Die beiden zweiten Stutzen 49,49′ werden in axialer Richtung je von einer zur Lagerung eines zentrisch im Rohrkörper 45 angeordneten Führungsrohres 50 ausgebildeten Bohrung 44,44′ durchdrungen. Das Führungsrohr 50 ist in den je mit einem Linearlager 52,52′ sowie Dichtungen 51,51′ und 53,53′ versehenen zweiten Stutzen 49,49′, wie auch die Kolbenstange 42 in den ersten Stutzen 39,39′, linear in Pfeilrichtung X verschiebbar geführt. Oberhalb des ersten Führungsrohres 50 ist in dem Flansch 35 ein zweites Rohr 6o angeordnet, welches als zweite Führung sowie zur Aufnahme einer elektrischen Leitung 61, vorzugsweise eines elastischen Flachbandkabels dient.

Wie in Fig. 2 und Fig. 3 weiterhin dargestellt, ist an der einen Seite der Lineareinheit 20 das mit der Kolbenstange 42 und dem ersten Führungsrohr 50 sowie mit dem zweiten Führungsrohr 60 wirkverbundene Anbauelement 90 angeordnet, während an der anderen Seite der Lineareinheit 20 ein mit der Kolbenstange 42 und dem ersten Führungsrohr 50 wirkverbundenes Endstück 55 angeordnet ist. Die beiden Teile 90 und 55 sind mittels Schrauben 43 und 46 mit der Kolbenstange 42 und mittels Schrauben 54 und 56 mit dem Führungsrohr 50 wirkverbunden. Die Schrauben 54 und 56 sind vorzugsweise als Verschlusselemente für das in axialer Richtung von einer Durchgangsbohrung 47 durchdrungene Führungsrohr 50 ausgebildet.

Das in Fig. 3 schematisch und in Schnittansicht dargestellte Anbauelement 90 hat ein Gehäuse 75, welches zur Aufnahme von Steuerventilen 80, insbesondere zur Aufnahme von elektrisch/pneumatisch oder elektrisch/hydraulisch betätigbaren Mikro-Steuerventilen ausgebildet ist. Die Mikroventile 80 sind einerseits über das in dem Rohr 60 geführte Kabel 61 elektrisch und andererseits über ein noch zu beschreibendes Kanalsystem pneumatisch oder hydraulisch mit der Lineareinheit 20 wirkverbunden. Das Gehäuse 75 des Anbauelements 90 kann zur Aufnahme und Befestigung einer zweiten Lineareinheit (nicht dargestellt) für eine weitere, in Fig. 1 mit Pfeilrichtung Y angedeutete Bewegung, oder aber zur Befestigung des in Fig. 1 schematisch, strichpunktiert angedeuteten Greiferorgans 95 ausgebildet sein. Seitlich am Gehäuse 75 ist ferner ein Anschluss 89 für eine entsprechende Energiezufuhr sowie ein Stecker 88 für einen weiteren elektrischen Anschluss vorgesehen. Das Greiferorgan 95 ist entweder am Gehäuse 75 oder aber an einer zweiten Lineareinheit (nicht dargestellt) befestigt in Pfeilrichtung Z schwenk und/oder drehbar gelagert.

Fig. 4 zeigt in grösserem Massstab einen Schnitt gemäss der Linie IV-IV in Fig. 2 und man erkennt das im wesentlichen aus seitlichen Wänden 23,23′, einem oberen Boden 24 und einem unteren Boden 24′ gebildete Gehäuse 25 der Lineareinheit 20. Das Gehäuse 25 wird durch zwei senkrechte Zwischenwände 26,26′ und zwei waagerechte Zwischenwände 27,27′ in vier Kammern 30,31,32 und 33 unterteilt, wobei die Zwischenwände 26,26' und 27,27' an ein in axialer Richtung des Gehäuses 25 orientiertes Verbindungteil 28 sowie an den Wänden 23,23' und Böden 24,24' angeformt sind. Das Verbindungteil 28 ist einerseits zur Stabilisierung des Gehäuses 25 und andererseits zur Aufnahme weiterer Elemente als Hohlkörper, rohrförmig ausgebildet.

Die erste Kammer 30 des Gehäuses 25 ist zur Aufnahme der aus der Rohrkörper 40, dem Kolben 41 und der Kolbenstange 42 gebildeten Betätigungsvorrichtung 21 vorgesehen, mittels welcher Betätigungsvorrichtung im wesentlichen die lineare Bewegung des Anbauelements 90 mit dem Greiferorgan 95 in Pfeilrichtung X (Fig. 1-3) erzeugt wird. In der unter der ersten Kammer 3o angeordneten und mit einem Fenster 29 versehenen zweiten Kammer 31 ist als Ausführungsbeispiel ein schematisch dargestelltes elektrisch/pneumatisch betätigbares Steuerventil 70 angeordnet und mit nicht dargestellten Mitteln im Gehäuse 25 lösbar befestigt. Das Steuerventil 70 hat mindestens einen Anschluss 69, beispielsweise für die Druckluftzufuhr sowie einen Anschluss 68 für die elektrische Energiezuführung. Die diagonal zur ersten Kammer 30 orientierte dritte Kammer 32 dient zur Aufnahme der aus dem Rohrkörper 45 und dem Führungsrohr 5o gebildeten und mit 22 bezeichneten Führungsvorrichtung. Die vierte Kammer 33 dient zur Aufnahme der elektrischen Leitung/en 61, welche einerseits durch das Rohr 60 dem Anbauelement 90 zugeführt wird und andererseits bei der Hin- und Herbewegung in Pfeilrichtung X, wie in Fig. 3 anhand der strichpunktierten Linie dargestellt gut abrollbar und gegen unbeabsichtigten, äusseren Eingriff geschützt auf der Zwischenwand 27 in der Kammer 33 gelagert ist.

An dieser Stelle sei darauf hingewiesen, dass die erste, für die Betätigungsevorrichtung 21 vorgesehene Kammer 31 sowie die zweite, für die Führungsvorrichtung 22 vorgesehene Kammer 32 zur Dämpfung von eventuell auftretenden Vibrationen vorzugsweise ausgeschäumt sind, und dass das Gehäuse 25 beispielsweise im Strangpressverfahren, vorzugsweise aus Leichtmetall hergestellt ist.

Zum Abdämpfen der linearen Bewegung in der jeweiligen Endlage ist an dem Gehäuse 75 des Anbauelements 90 sowie an dem Endstück 55 je eine zur Hubbegrenzung ausgebildete Lagerbuchse 65,65' angeordnet und mit nicht näher dargestellten Mitteln befestigt. Korrespondierend zu der jeweiligen Lagerbuchse 65 oder 65' ist an den beiden Flanschkörpern 35,35' je ein Zapfen 64,64' vorgesehen, welche Zapfen 64,64' in der Endstellung in die mit entsprechenden Dämpfungsmitteln, vorzugsweise mit Feststoffdämpfern (nicht dargestellt) versehenen Lagerbuchsen 65,65' eingreifen. An den Lagerbuchsen 65,65' ist weiterhin eine kreisförmige Scheibe 66,66' vorgesehen, welche Scheiben zur besseren Führung des Anbauelements 90 sowie des Endstücks 55 in ihrem äusseren Bereich entsprechend ausgebildet mit dem Führungsrohr 50 und der Kolbenstange 42 in Wirkverbindung stehen.

Fig. 5 zeigt einen Schnitt gemäss der Linie V-V in Fig. 3 und man erkennt das teilweise aufgebochen dargestellte Gehäuse 75 des Anbauelements 90, die Kolbenstange 42, das weitgehend diagonal dazu angeordnete erste Führungsrohr 50, das zur Aufnahme der elektrischen Leitung 61 und gleichzeitig als Führung vorgesehene Rohr 60, die zur Führung der Teile 42 und 50 vorgesehene Scheibe 66 sowie die mit einer Öffnung 63 für den Zapfen 64 (in Fig. 5 nicht dargestellt) versehene Lagerbuchse 65.

Arbeitsweise der vorstehend beschriebenen Lineareinheit 20 in Verbindung mit der Betätigungs und Führungsvorrichtung 21,22 und dem Anbauelement 90 wird nachstehend beschrieben:
Ausgehend von einer nicht dargestellten Grundstellung des Anbauelements 90 in bezug zu der Lineareinheit 20 wird für die Bewegung in Pfeilrichtung X in an sich bekannter Weise von einem externen Signalgeber (nicht dargestellt) dem mit dem Anschluss 68 mit dem Signalgeber in Verbindung stehenden und mit dem Anschluss 69 an ein Druckluft oder Hydrauliksystem (nicht dargestellt) angeschlossenen Steuerventil 70 ein erstes Signal zugeführt. Dieses erste Signal bewirkt, dass von dem Ventil 70 entsprechend gesteuert über eine in Fig. 4 schematisch angedeutete Leitung 3 und über die Bohrung 2 oder 2' der Zylinderkammer 1 oder 1' (Fig. 2) zum Beispiel Druckluft zugeführt und somit der Kolben 41 zusammen mit der Kolbenstange 42 für die Bewegung in Pfeilrichtung X entsprechend betätigt wird.

Für eine Betätigung des am Anbauelement 90 angeordneten Greiferorgans 95 oder dergleichen, wird vom Netzanschluss des Steuerventils 70 über eine in Fig. 4 schematisch angedeutete Leitung 4 und über entsprechend zugeordnete Bohrungen 5,5'den Lagerteilen 49, 49' die Kammer 45' des Rohrkörpers 45 mit Druckluft versorgt. In dem Führungsrohr 50 ist mindestens eine mit der in axialer Richtung des Führungsrohres 50 orientierten Durchgangsbohrung 47 in Verbindung stehende Bohrung 48 vorgesehen. Über die beiden Bohrungen 48,47 kann sich der in der Kammer 45' vorliegende Druck bis in ein in Fig. 3 schematisch im Gehäuse 75 des Anbauelements 90 angedeutetes Kanalsystem 91 aufbauen, wobei das Kanalsystem 91 in nicht näher dargestellter Weise mit den einzelnen Mikro-Steuerventilen 80 in Verbindung steht.

Zur Betätigung des Greiferorgans 95 wird von dem Steuerven til 70 über eine in Fig. 4 gestrichelt dargestellte elektrische Leitung 6 sowie über die damit in nicht näher dargestellter Weise verbundene Leitung 61 (Fig. 3) den Mikro-Steuerventilen 80 ein entsprechendes Signal zugeführt, so dass beispielsweise die in Fig. 1 dargestellte und mit Z bezeichnete Bewegung oder eine andere, nicht dargestellte Bewegung, beispielsweise eine Greifbewegung oder dergleichen von dem Organ 95 ausgeführt werden kann.

**Patentansprüche**

1. Montage-Einrichtung, bestehend aus einer Lineareinheit und einem relativ dazu verstellbaren Anbauelement (90) mit elektrisch/pneumatisch oder elektrisch/hydraulisch ansteuerbarem Greiferorgan (95), wobei die Lineareinheit (20) ein Gehäuse (25), eine darin angeordnete und als Kolben/Zylindereinheit ausgebildete Betätigungsvorrichtung (21) sowie eine achsparallel dazu angeordnete und mit einem ersten Führungsrohr (50) versehene Führungsvorrichtung (22) umfasst, dadurch gekennzeichnet, dass das Gehäuse (25) im Profilquerschnitt gesehen in mehrere, in Längsrichtung orientierte und im wesentlichen durch entsprechend angeordnete Wände (26,26' und 27,27') gebildete Kammern (30,31,32,33) unterteilt ist, welche zum getrennten Einbau eines Steuerventils (70), der Betätigungsvorrichtung (21), der Führungsvorrichtung (22) und eines zweiten Führungsrohres (60) ausgebildet sind, und dass einerseits von dem eingebauten Steuerventil (70) über entsprechende Kanäle der Kolben/Zylindereinheit (40,41) sowie dem Anbauelement (90) die pneumatische oder hydraulische Energie zuführbar und andererseits über ein im zweiten Führungsrohr (60) angeordnetes und in Längsrichtung in der einen Kammer (33) rollbar geführtes, elektrisches Flachbandkabel (61) die elektrische Energie zuführbar ist.

2. Montage-Einrichtung nach Anspruch 1, dadurch gekennzeichnet, dass die Kolben/Zylindereinheit (40,41) über Kanäle (2,2') und eine erste Verteilerleitung (3) mit dem im Gehäuse (25) integrierten Steuerventil (70) verbunden ist.

3. Montage-Einrichtung nach Anspruch 1, dadurch gekennzeichnet, dass das in der Führungsvorrichtung (22) angeordnete und für die pneumatische oder hydraulische Energieversorgung des Anbauelements (90) vorgesehene erste Führungsrohr (50) über Kanäle (5,5') und eine zweite Verteilerleitung (4) mit dem im Gehäuse (25) integrierten Steuerventil (70) verbunden ist.

4. Montage-Einrichtung nach Anspruch 1 und 3, dadurch gekennzeichnet, dass das Anbauelement (90) ein zur Aufnahme von Steuerventilen, insbesondere von Mikro-Steuerventilen (80) ausgebildetes Gehäuse (75) umfasst, welches für die pneumatische oder hydraulische Energieversorgung mit dem ersten Führungsrohr (50) und für die elektrische Energieversorgung mit dem zweiten Führungsrohr (60) verbunden ist.

5. Montage-Einrichtung nach Anspruch 4, dadurch gekennzeichnet, dass das Gehäuse (75) des Anbauelements (90) für die pneumatische oder hydraulische Energieversorgung der integrierten Steuerventile (80) mit einem entsprechend ausgebildeten Kanalsystem (91) versehen ist.

6. Montage-Einrichtung nach Anspruch 1, dadurch gekennzeichnet, dass die für die Betätigungsvorrichtung (21) sowie die für die Führungsvorrichtung (22) im Gehäuse (25) vorgesehenen Kammern (30,32) mit geeignetem Kunststoff ausgeschäumt sind.

7. Montage-Einrichtung nach Anspruch 1, dadurch gekennzeichnet, dass das Gehäuse (25) ein im Profilquerschnitt gesehen im Zentrum angeordnetes und in Längsrichtung orientiertes, rohrförmiges Verbindungsteil (28) aufweist, an welchem die die einzelnen Kammern (30,31,32,33) bildenden Wände (26,26' und 27,27') angeformt sind.

**Claims**

1. Assembly device, consisting of a linear unit and a built-on element (90), which can be adjusted relative thereto, having electrically/pneumatically or electrically/hydraulically controllable gripper part (95), with the linear unit (20) comprising a housing (25), an actuating arrangement (21) which is arranged therein and which is developed as a piston/cylinder unit, and also a guide arrangement (22) which is arranged axially parallel thereto and which is provided with a first guide tube (50), characterised in that the housing (25), viewed in cross section profile, is subdivided into several chambers (30, 31, 32, 33) which are orientated in the longitudinal direction, are formed essentially by means of correspondingly arranged walls (26, 26' and 27, 27') and are developed for the purpose of the separate installation of a control valve (70), the actuating arrangement (21), the guide arrangement (22) and a second guide tube (60), and in that, on the one hand, the pneumatic or hydraulic energy can be fed from the installed control valve (70) by way of corresponding channels to the piston/cylinder unit (40, 41) and also to the built-on element (90) and, on the other hand, the electric energy can be fed by way of an electric ribbon cable (61) which is arranged in the second guide tube (60) and which is guided such that it can be rolled in the longitudinal direction in the one chamber (33).

2. Assembly device according to claim 1, characterised in that the piston/cylinder unit (40, 41) is connected with the control valve (70), which is integrated in the housing (25), by way of channels (2, 2') and a first distributor line (3).

3. Assembly device according to claim 1, characterised in that the first guide tube (50), which is arranged in the guide arrangement (22) and is provided for the pneumatic or hydraulic energy supply of the built-on element (90), is connected with the control valve (70), which is integrated in the housing (25), by way of channels (5, 5') and a second distributor line (4).

4. Assembly device according to claim 1 and 3, characterised in that the built-on element (90) comprises a housing (75) which is developed for the accommodation of control valves, in particular micro-control valves (80), and which is connected with the first guide tube (50) for the pneumatic or hydraulic energy supply and with the second guide tube (60) for the electric energy supply.

5. Assembly device according to claim 4, characterised in that the housing (75) of the built-on element (90) is provided with a correspondingly developed channel system (91) for the pneumatic or hydraulic energy supply of the integrated control valves (80).

6. Assembly device according to claim 1, characterised in that the chambers (30, 32), which are provided for the actuating arrangement (21) and also for the guide arrangement (22) in the housing (25), are foam-packed with a suitable plastics material.

7. Assembly device according to claim 1, characterised in that the housing (25) has a tubular connecting portion (28) which, viewed in cross section profile, is arranged in the centre, is orientated in the longitudinal direction and on which the walls (26, 26' and 27, 27') forming the individual chambers (30, 31, 32, 33) are pre-formed.

**Revendications**

1. Dispositif de montage, constitué d'une unité linéaire et d'un élément rapporté (90), déplaçable par rapport à celle-ci, avec un organe de préhension (95) commandé électriquement/pneumatiquement ou électriquement/hydrauliquement, l'unité linéaire (20) comportant un boîtier (25), un dispositif d'actionnement placé à l'intérieur de celui-ci et configuré en vérin ainsi qu'un dispositif de guidage (22), disposé avec son axe parallèle au dispositif d'actionnement et doté d'un premier tube de guidage (50), caractérisé en ce que le boîtier (25), vu dans la section transversale de son profil, est subdivisé en plusieurs chambres (30, 31, 32, 33) orientées longitudinalement et formées pour l'essentiel par des cloisons (26, 26' et 27, 27') disposées en conséquence, lesquelles chambres sont conçues pour le montage séparé d'une vanne de commande (70), d'un dispositif d'actionnement (21), d'un dispositif de guidage (22) et d'un second tube de guidage (60) et en ce que d'une part l'énergie pneumatique ou hydraulique provenant de la vanne de commande (70) montée à l'intérieur, peut être amenée dans une chambre (33), par des canaux appropriés, au vérin (40, 41) ainsi qu'à l'élément rapporté (90) et d'autre part, l'énergie électrique peut être amenée dans une chambre (33) par un câble électrique plat (61), placé dans le second tube de guidage (60) et guidé roulant dans la direction longitudinale.

2. Dispositif de montage selon la revendication 1, caractérisé en ce que le vérin (40, 41) est relié par des canaux (2, 2') et par une première conduite de distribution (3), à la vanne de commande (70) intégrée dans le boîtier (25).

3. Dispositif de montage selon la revendication 1, caractérisé en ce que le premier tube de guidage (50), placé dans le dispositif de guidage (22) et prévu pour l'alimentation en énergie pneumatique ou hydraulique de l'élément rapporté (90), est relié, par des canaux (5, 5') et par un seconde conduite de distribution (4), à la vanne de commande (70) intégrée dans le boîtier (25).

4. Dispositif de montage selon les revendications 1 et 3, caractérisé en ce que l'élément rapporté (90) comporte un boîtier (75) conçu pour loger des vannes de commande, en particulier des microvannes de commande (80), lequel boîtier est relié au premier tube de guidage (50) pour l'alimentation en énergie pneumatique ou hydraulique et au second tube de guidage (60), pour l'alimentation en énergie électrique.

5. Dispositif de montage selon la revendication 4, caractérisé en ce que le boîtier (75) de l'élément rapporté (90) est doté d'un système de canaux (91) convenablement conçu, pour l'alimentation en énergie pneumatique ou hydraulique des vannes de commande (80) intégrées.

6. Dispositif de montage selon la revendication 1, caractérisé en ce que les chambres (30, 32), prévues pour le dispositif d'actionnement (21) ainsi que celles prévues pour le dispositif de guidage (22) dans le boîtier (25), sont dans une matière synthétique expansée appropriée.

7. Dispositif de montage selon la revendication 1, caractérisé en ce que le boîtier (25), vu dans la section transversale de son profil, comporte un élément de liaison (28) tubulaire, placé au centre et orienté dans la direction longitudinale, sur lequel sont formées les cloisons (26, 26' et 27, 27') formant les différentes chambres (30, 31, 32, 33).

FIG. 1

FIG. 5

FIG. 4

FIG. 2

FIG. 3